Europäisches Patentamt

European Patent Office

Office européen des brevets

(11) Veröffentlichungsnummer: **0 314 970**
**A1**

(12) EUROPÄISCHE PATENTANMELDUNG

(21) Anmeldenummer: 88117243.1

(22) Anmeldetag: 17.10.88

(51) Int. Cl.⁴: **F16L 58/18**

(30) Priorität: 06.11.87 CH 4340/87

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **GEORG FISCHER
AKTIENGESELLSCHAFT
Mühlentalstrasse 105
CH-8201 Schaffhausen(CH)**

(72) Erfinder: **Kunz, Peter
Breitenaustrasse 156
CH-8200 Schaffhausen(CH)**

(54) **Verfahren und Einrichtung zum Auskleiden eines Verbindungs-Endes von Verbund-Rohrleitungskomponenten.**

㉗ Ein Abdeckteil (10) wird in das mit einem Absatz (5) versehene Verbindungsende (2) einer Verbund-Rohrleitungskomponente eingeschoben und mittels einer Schweisseinrichtung durch eine Schweissung (19) am stirnseitigen Ende des inneren Mantels (4) wulstfrei und nutenfrei verbunden.

Das so vorbereitete Verbindungsende (2) weist somit einen nicht verengten, übergangsfreien thermoplastischen inneren Mantel (3) mit einer aus dem gleichen Material hergestellten stirnseitigen Abdeckung auf, welche mindestens bis zum Aussenumfang des äusseren Mantels (4) reicht, welcher vorzugsweise aus einem Glasfaser-Laminat hergestellt ist.

EP 0 314 970 A1

Fig 4

## Verfahren und Einrichtung zum Auskleiden eines Verbindungs-Endes von Verbund-Rohrleitungskomponenten

Die Erfindung betrifft ein Verfahren zum Auskleiden eines Verbindungs-Endes von Verbund-Rohrleitungskomponenten gemäss dem Oberbegriff von Anspruch 1, eine zur Durchführung des Verfahrens erforderliche Einrichtung sowie die durch das Verfahren hergestellten Verbindungs-Enden.

Verbund-Rohrleitungskomponenten, wie z. B. Rohre, Fittings und Armaturen mit einem inneren Mantel aus einem thermoplastischen Material wie z. B. aus Polyäthylen, Polypropylen, Polyvinylchlorid usw. und einem äusseren Mantel aus einem Material höherer Festigkeit wie z. B. Metall oder vorzugsweise einem glasfaserverstärkten Laminat-Mantel, werden für die Leitung von aggresiven Medien in der chemischen Industrie verwendet. Der äussere Mantel dient zur Verstärkung der Rohre, um Medien mit höheren Drücken weiterzuleiten, als auch zur Aufnahme von inneren und äusseren Kräften, wie z. B. von Zug-Druck bzw. Biegekräften oder Wärmeausdehnungskräften auf die Rohrleitungen.

Bei der Herstellung von lösbaren Verbindungen zwischen den Rohren bzw. zwischen Rohren und Fittings bzw. Armaturen, ist es wichtig, dass das Medium nicht mit dem äusseren Mantel in Berührung kommt und die äusseren Kräfte im wesentlichen durch den äusseren Mantel weitergeleitet werden.

Durch die DE-A1-30 14 158 ist ein Verfahren der eingangs genannten Art bekanntgeworden, bei welchem in das offene Ende eines rohrförmigen Teiles ein Auskleidungs- bzw. Abdeckteil eingesetzt wird. Dieses Teil weist einen Zylinderkörper auf, welcher durch Kleben mit dem inneren Mantel verbunden ist und einen radial nach aussen sich erstreckenden Flansch zur Abdeckung des stirnseitigen Endes des äusseren Mantels auf. Durch den Zylinderkörper wird der lichte Querschnitt die Rohrleitung verringert wobei an derem inneren Ende eine Stirnfläche entsteht, an welcher sich Schmutz, Bakterien usw. ablagern kann. Die Klebeverbindung muss einwandfrei ausgeführt sein, damit keine zusätzliche Hohlräume entstehen, welche unter Umständen undichte Rohrverbindungen zur Folge haben können.

Bei Rohrleitungssystemen für die Weiterleitung von Medien mit hohem Reinheitsgrad, wie z. B. in der Halbleiterindustrie, Lebensmittelindustrie, Arzneimittelindustrie, biotechnischen Industrie und bei der Herstellung von Chemikalien, ist es wichtig, dass Verunreinigungen vermieden werden und die Rohrleitungen, Fittings und insbesondere die Rohrverbindungen glatte Innenwände ohne Absätze, Kanten und Ecken aufweisen.

Aufgabe der vorliegenden Erfindung ist die Schaffung eines Verfahrens der eingangs genannten Art, welches ein Auskleiden der Verbindungsenden mit glatten Wänden des inneren Mantels ermöglicht und keine Verringerung des Durchflussquerschnittes ergibt. Die dafür erforderliche Einrichtung soll durch deren einfache Ausbildung und Handhabung direkt an Baustellen verwendet werden können, damit die dort abgeschnittene Rohrleitung zur Herstellung der Rohrverbindung mit einer Auskleidung versehen werden kann, welche den genannten Anforderungen entspricht.

Erfindungsgemäss wird diese Aufgabe durch die kennzeichnenden Merkmale des Verfahrensanspruches 1 und des Einrichtungsanspruches 4 gelöst.

Die mittels des Verfahrens hergestellten Auskleidungen an den Verbindungsenden von Verbund-Rohrleitungskomponenten sind in den Ansprüchen 9 und 13 gekennzeichnet.

Das erfindungsgemässe Verfahren gewährleistet eine dichte Verbindung und einen sauberen Uebergang ohne Nuten und Vorsprünge vom inneren Mantel zum die Stirnseite des Verbindungsendes abdeckenden thermoplastischen Abdeckteil.

Die dafür erforderliche erfindungsgemässe Einrichtung ist einfach im Aufbau und kann jederzeit an Baustellen eingesetzt werden, so dass die dort auf die erforderliche Länge abgeschnittenen Verbund-Rohre an ihrem Verbindungsende mit einer dichten wulst- und absatzfreien Auskleidung versehen werden können.

Die Erfindung ist anhand von Ausführungsbeispielen in den Zeichnungen vereinfacht dargestellt und nachfolgend beschrieben. Es zeigen:

Fig. 1 das Verbindungsende einer Verbund-Rohrkomponente und ein Abdeckteil vor dem Schweissen im Schnitt.

Fig. 2 das Verbindungsende gemäss Fig. 1 während dem Schweissen des Abdeckteils mit einer Schweisseinrichtung.

Fig. 3 ein Diagramm des Temperaturverlaufes beim Schweissen.

Fig. 4 das fertig ausgekleidete Verbindungsende im Teilschnitt.

Fig. 5 eine Ausführungsvariante von Fig. 1.

Fig. 6 das Verbindungsende gemäss Fig. 5 während dem Schweissen

Fig. 7 das fertig ausgekleidete Befestigungsende gemäss Fig. 5 im Teilschnitt und

Fig. 8 ein fertiges Verbindungsende mit einem eingeschweissten Rohrstück.

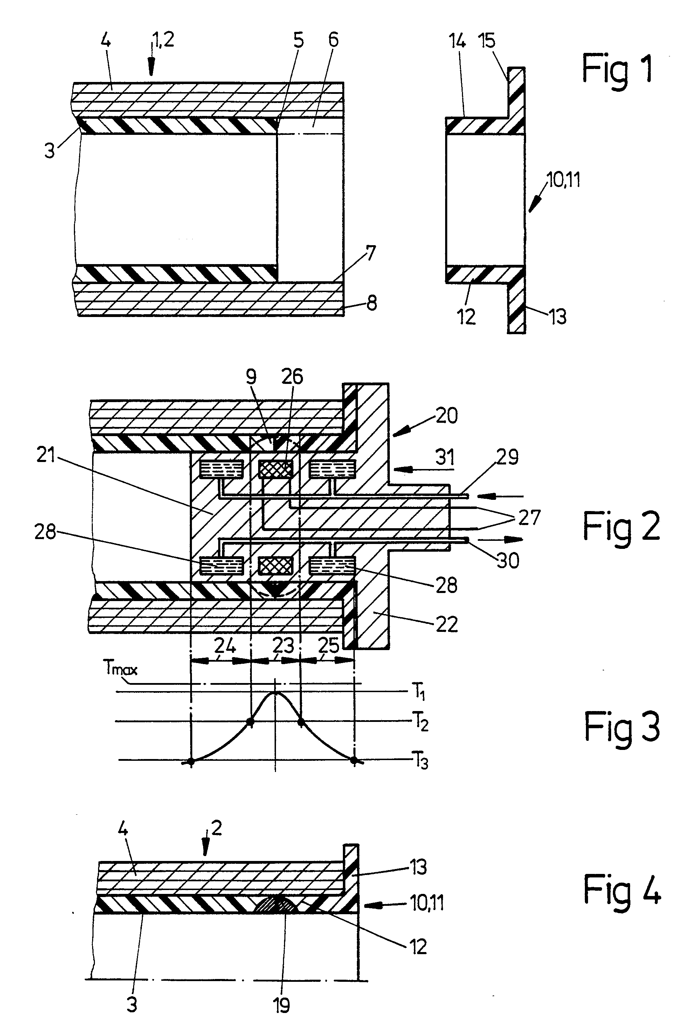

Fig. 1 zeigt ein Verbindungsende 2 einer Verbund-Rohrleitungskomponente 1 wie z. B. einer Rohrleitung oder eines Fittings, welche einen inneren Mantel 3 aus einem thermoplastischen Material und einen äusseren Mantel 4 aus einem Material mit höherer Festigkeit, vorzugsweise aus einem faserverstärkten Laminat wie z. B. gewickelte Glasfasern mit einem ungesättigten Polyesterharz oder Epoxyd-Harz getränkt, besteht. Der äussere Mantel kann aber auch z. B. aus Metall bestehen. Das Verbindungsende 2 weist einen angeformten Absatz 5 auf. Insbesondere bei Rohren, welche direkt am Verwendungsort auf die erforderliche Länge abgeschnitten werden, wird dieser Absatz 5 durch spanabhebendes Ausdrehen bzw. durch anderweitiges Entfernen des inneren Mantels 3 hergestellt, wobei der Aussendurchmesser der Ausdrehung 6 vorzugsweise dem Innendurchmesser des äusseren Mantels 4 entspricht.

Fig. 1 zeigt noch ein Abdeckteil 10, welches als Flanschbüchse 11 ausgebildet ein zylindrisches Ringteil 12 und einen von diesem sich radial nach aussen erstreckenden Flansch 13 aufweist. Der Innendurchmesser des zylindrischen Ringteiles 12 entspricht dem Innendurchmesser des inneren Mantels 3. Die beim Einschieben in das Verbindungsende 2 mit dem äusseren Mantel 4 in Berührung kommenden Zylinderfläche 14 und Flanschfläche 15 sind vorzugsweise mit einer haftverstärkenden Oberfläche versehen. Die Flächen 14 und 15 oder die entsprechenden Kontaktflächen 7 und 8 am äusseren Mantel 4 des Verbindungsendes werden vor dem Einschieben der Flanschbüchse 11 mit einem Kleber wie z. B. Polyesterharz bestrichen. Dadurch wird eine einwandfreie Haftung zwischen dem thermoplastischen Abdeckteil 10 und dem äusseren Mantel 4 hergestellt, wobei durch Ausfüllung aller Lufthohlräume hier die gleiche Permeabilität hergestellt wird, wie sie zwischen dem inneren und dem äusseren Mantel gegeben ist. Nach dem Einsetzen des Abdeckteiles 10 wird an der Stossstelle zwischen dem inneren Mantel 3 und des Abdeckteiles mittels einer Schweisseinrichtung 20 gemäss Fig. 2 eine Schweissverbindung hergestellt.

Die Schweisseinrichtung weist eine in das Verbindungsende 2 einsteckbare Büchse 21 mit einem Flansch 22 auf, welche mit einer im Schweissbereich angeordneten Heizzone 23 und mit zwei benachbarten Kühlzonen 24, 25 versehen ist. Die Schweisszone weist ein elektrisches Heizelement 26 auf, welches über Kabel 27 mit einer Stromquelle verbunden ist.

Die Kühlzonen 24, 25 weisen ringförmige Kammern 28 auf, welche mit einer Zuflussleitung 29 und einer Abflussleitung 30 für die Zirkulation eines gasförmigen oder flüssigen Kühlmediumes wie z. B. Luft, Wasser, Oel verbunden sind.

Alternativ können auch für die Kühlung elektrische Kühlelemente und/oder für die Heizung ein erhitztes Medium wie z. B. Heizluft verwendet werden.

Fig. 3 zeigt den Temperaturverlauf T am Aussenumfang der Schweissvorrichtung 20 im Bereich der drei Zonen 23, 24, 25, wobei $T_1$ die max. zulässige Temperatur Tmax nicht überschreiten darf, damit nie eine Zerstörung des Thermoplastes und/oder des Glasfaser-Laminates möglich ist. Die Temperatur $T_2$ sollte mindestens die Schmelzpunkttemperatur des Thermoplastes erreichen. Die Kühlung in den Kühlzonen 24, 25 muss so eingestellt sein, dass an den Enden der stützenden Büchse 21 die Temperatur $T_3$ nie grösser als die Schmelzpunkttemperatur des Thermoplastes ist.

Mit der Pos. 9 ist in Fig. 2 der Bereich des aufgeschmolzenen Thermoplastmaterials vom inneren Mantel 3 und des Abdeckteils 10 bezeichnet. Der für eine gute Verschweissung erforderliche Schweissdruck entsteht bei dessen Wärme-Ausdehnung, da die Schmelze wegen der im Innendurchmesser passend eingesetzten Büchse 21 nicht wegfliessen kann. Der Schmelzdruck kann durch eine Axialkraft gemäss Pfeil 31 auf die Schweissvorrichtung 20 erhöht werden.

Fig. 4 zeigt das fertig ausgekleidete Verbindungsende 2, wobei vom inneren Mantel 3 zum Abdeckteil 10 durch die Schweissverbindung 19 ein glatter, dichter, wulst- und nutenfreien Uebergang gewährleistet ist.

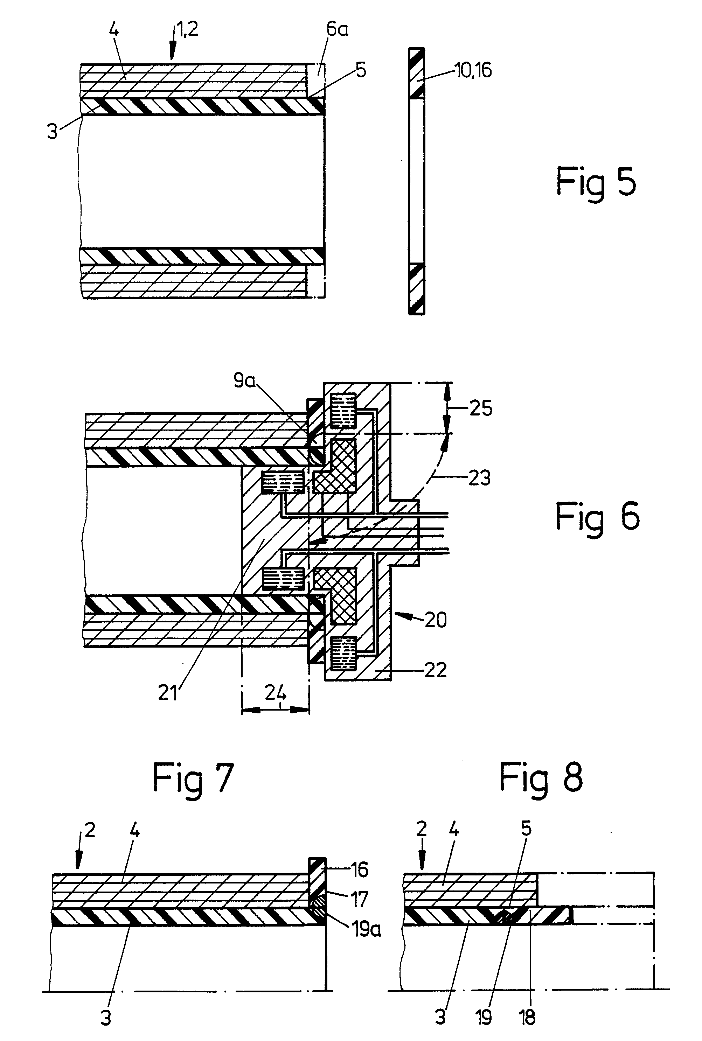

Fig. 5 bis 7 zeigen eine zweite Variante zur Auskleidung des Verbindungsendes 2 einer Verbund-Rohrleitungskomponente 1. Der Absatz 5 wird hierbei durch eine Abdrehung bzw. Entfernung 6a des äusseren Mantels 4 gebildet, so dass der innere Mantel 3 beim so vorbereiteten Verbindungsende über den äusseren Mantel 4 vorsteht. Das Abdeckteil 10 ist als Flanschring 16 ausgebildet, dessen Innendurchmesser dem Aussendurchmesser des inneren Mantels 3 entspricht.

Nach dem Aufschieben des Flanschringes 16 auf den inneren Mantel 3 wird die in Fig. 6 dargestellte Schweisseinrichtung 20 mit deren Büchse 21 in den inneren Mantel eingesteckt, wobei mit der im wesentlichen im Flansch 22 angeordneten Heizzone 23 das thermoplastische Material an der Stossstelle zwischen dem Flanschring 16 und dem inneren Mantel 3 gemäss Pos. 9a aufgeschmolzen wird. Die Kühlzone 24 ist in der Büchse 21 und die Kühlzone 25 im Flansch 22 angeordnet, wobei die Ausbildung dieser Zonen 23, 24, 25 wie zu Fig. 2 beschrieben erfolgen kann.

Fig. 7 zeigt das fertig ausgekleidete Verbindungsende 2, wobei bei dieser Variante das Abdeckteil 10 durch die Ausbildung als Flanschring 16 einfach herstellbar ist, was z. B. durch Ausstanzen aus einer Platte aus thermoplastischem Material erfolgen kann.

Auf die zusätzliche Klebeverbindung kann bei dieser Ausführungsvariante verzichtet werden.

Die Stirnfläche 17 ist durch den Anpressdrukkes des Flansches 22 der Schweissvorrichtung 20 eben glatt und somit wulst- und rillenfrei, wodurch eine dichte Anlage mit der Stirnfläche des zweiten Verbindungsendes bei einer Flanschverbindung, wie sie z. B. in der eingangs genannten DE-A 30 14 158 beschrieben, gewährleistet ist.

Der Innenumfang des inneren Mantels 3 ist hiebei ebenfalls ohne Wülste, Absätze, Nuten bzw. Rillen glatt bis zum stirnseitigen Ende.

Der Aussendurchmesser des Abdeckteils 10 ist bei beiden Varianten mindestens so gross, wie der Aussendurchmesser des äusseren Mantels, wobei vorteilhafterweise zur Vergrösserung der Dichtfläche bei der Flanschverbindung das Abdeckteil 10 im Aussendurchmesser grösser ausgebildet sein kann.

Fig. 8 zeigt ein fertiges Verbindungsende 2, bei dem ein zylindrisch rohrförmiges Teil 18 durch eine Schweissverbindung 19 mit dem inneren Mantel 3 verbunden ist. Die Herstellung der Schweissverbindung, einschliesslich der möglichen Klebung, erfolgt wie zu den Fig. 1 bis 4 beschrieben, wobei auch die Schweisseinrichtung gemäss Fig. 2 dafür Verwendung findet. Das rohrförmige Teil 18 ragt bei dem Verbindungsende über den äusseren Mantel 4 hinaus.

Der glatte, wulst- und nutenfreie Uebergang zwischen dem inneren Mantel 3 und dem Teil 18 ist hierbei ebenfalls gewährleistet.

Ein derartiges Verbindungsende 2 ist z.B. für eine nicht lösbare Verbindung mit einem zweiten in Fig. 8 strichpunktierten Ende eines Verbundrohres geeignet.

## Ansprüche

1. Verfahren zum Auskleiden des offenen Verbindungs-Ende von Verbund-Rohrleitungskomponenten, welche einen inneren Mantel aus einem thermoplastischen Material und einen äusseren Mantel aus einem Material mit höherer Festigkeit wie z. B. aus einem Glasfaserlaminat aufweist, dadurch gekennzeichnet, dass zuerst am offenen Ende ein Absatz zwischen dem inneren Mantel und dem äusseren Mantel hergestellt wird und dass ein Abdeckteil aus thermoplastischem Material mittels einer Schweissverbindung wulst- und nutenfrei mit einer Absatz-Fläche des inneren Mantels verbunden wird.

2. Verfahren nach Anspruch 1, dadurch gekennzeichnet, dass der Absatz durch Entfernung des Endstückes des inneren Mantels gebildet wird, und dass ein zylindrisch-rohrförmiges Teil oder ein im Achsschnitt winkelförmiges Abdeckteil stirnseitig mit dem inneren Mantel durch die Schweissung verbunden wird.

3. Verfahren nach Anspruch 2, dadurch gekennzeichnet, dass die mit dem äusseren Mantel in Kontakt kommenden Flächen des Abdeckteils mittels eines Klebers stoffschlüssig verbunden wird.

4. Verfahren nach Anspruch 1, dadurch gekennzeichnet, dass der Absatz durch die Entfernung des Endteiles des äusseren Mantels gebildet wird und dass ein flanschringförmiges Abdeckteil an deren Innen-Umfangsfläche mit der Aussen-Umfangsfläche des inneren Mantels durch eine Schweissung verbunden wird.

5. Einrichtung zur Durchführung des Verfahrens nach einem der Ansprüche 1 bis 4, gekennzeichnet durch eine in das Ende der Verbundrohrkomponente einschiebbaren, einen Flansch (22) aufweisende Büchse (21), welche mit einer im Schweissbereich angeordneten Heizzone (23) und mit benachbarten Kühlzonen (24, 25) versehen ist.

6. Einrichtung nach Anspruch 5, dadurch gekennzeichnet, dass die Heizzone (23) mittels elektrischen Heizelementen (26) aufheizbar ist.

7. Einrichtung nach Anspruch 5, dadurch gekennzeichnet, dass die Heizzone (23) mittels gasförmigen oder flüssigen Medien aufheizbar ist.

8. Einrichtung nach Anspruch 5, dadurch gekennzeichnet, dass die Kühlzonen (24, 25) mittels eines gasförmigen oder flüssigen Mediums kühlbar sind.

9. Verbindungsende von Verbund-Rohrkomponenten, hergestellt nach dem Verfahren gemäss Anspruch 2, dadurch gekennzeichnet, dass ein Abdeckteil (10) aus thermoplastischem Material am Innenumfang bündig mit dem inneren Mantel (3) und mit dessen stirnseitigem äusseren Mantel (4) eingesteckt angeordnet ist.

10. Verbindungsende nach Anspruch 9, dadurch gekennzeichnet, dass das Abdeckteil (10) als eine im Querschnitt winkelförmige Flanschbüchse (11) ausgebildet ist, wobei deren Flansch (13) mindestens das stirnseite Ende des äusseren Mantels (4) überdeckt.

11. Verbindungsende nach Anspruch 9, dadurch gekennzeichnet, dass das Abdeckteil als ein zylindrisch-rohrförmiges Teil (18) ausgebildet ist, welches über das Ende des äusseren Mantels (4) in Fortsetzung des inneren Mantels (3) hinausragt.

12. Verbindungsende nach einem der Ansprüche 9 bis 11, dadurch gekennzeichnet, dass die Berührungsflächen des äusseren Mantels (4) mit dem Abdeckteil (10) durch eine Klebung stoffschlüssig miteinander verbunden sind.

13. Verbindungsende von Verbund-Rohrkomponenten, hergestellt nach dem Verfahren gemäss Anspruch 4, dadurch gekennzeichnet, dass ein als Flanschring (16) ausgebildetes Abdeckteil (10) am Aussendurchmesser des inneren Mantels (3) zentriert mit diesem durch eine Schweissung verbunden ist, wobei der Aussendurchmesser des Flanschringes (16) mindestens das stirnseitige Ende des äusseren Mantels (4) überdeckt.

EP 0 314 970 A1

Fig 1

Fig 2

Fig 3

Fig 4

$T_{max}$

$T_1$

$T_2$

$T_3$

K.Nr. 2588/FIP

Fig 5

Fig 6

Fig 7

Fig 8

K.Nr. 2588 / FIP

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN Band 7, Nr. 246 (M-253) (1391), 2. November 1983; & JP - A - 58 132 512 (HOKUSHIN DENKI SEISAKUSHO), 06.08.1983 --- | 1, 4, 9 , 10 | F 16 L 58/18 |
| A | PATENT ABSTRACTS OF JAPAN Band 9, Nr. 220 (E-341) (1943), 6. September 1985; & JP - A - 60 78726 (MINEO MORI), 04.05.1985 --- | 1 | |
| A | US-A-4 122 870 (V.C. HINES) * Zusammenfassung; Figuren * --- | 1, 2, 5 , 9 - 11 | |
| A | CH-A- 381 932 (CIBA AG) * ganzes Dokument * --- | 1, 3 | |
| A | US-A-3 596 931 (MISHLER) ----- | | |

**RECHERCHIERTE SACHGEBIETE (Int. Cl.4)**

F 16 L 58/00
F 16 L 39/00
F 16 L 23/00
F 16 L 13/00

Der vorliegende Recherchenbericht wurde für alle Patentansprüche erstellt

| Recherchenort | Abschlußdatum der Recherche | Prüfer |
|---|---|---|
| BERLIN | 30-01-1989 | SCHAEFFLER C.A.A. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
   Dokument

EPO FORM 1503 03.82 (P0403)